# EUROPEAN PATENT APPLICATION

(11) **EP 2 826 360 A1**
(43) Date of publication of application: **21.01.2015**
(21) Application number: 14176086.8
(22) Date of filing: 08.07.2014
(51) Int. Cl.: A01G 1/12

(54) **An aspirating and blowing device**

(30) Priority: 19.07.2013 IT RE20130052
(71) Applicant: Eurosystems S.p.A., 42045 Luzzara (Reggio Emilia) (IT)
(72) Inventor: Bovi, Fabio, 42045 Luzzara (Reggio Emilia) (IT)
(74) Representative: Corradini, Corrado

(57) **Abstract**

An aspirating and blowing device (10) comprising: an impeller (20) contained in a substantially cylindrical chamber (12) provided with an access opening (121) for air; a manifold (40), provided with a connecting tract (400) branching from the cylindrical chamber, wherein the manifold (40) is forked into a first discharge conduit (41) and a second discharge conduit (42) branching respectively from the connecting tract (400), and valve means (70) associated to the manifold (40) and able to selectively close one from between the first discharge conduit (41) and the second discharge conduit (42).

## Description

### TECHNICAL FIELD

The present invention relates to an aspirating and blowing device.

In more detail, the invention relates to an aspirating and blowing device able to aspirate and collect, as well as blow, leaves, twigs, pruning detritus or the like.

### PRIOR ART

Blowing devices have been known for a long time, i.e. devices provided with an impeller located internally of a cylindrical chamber which is connected, by means of a radial connection, to a radial dispensing conduit provided with a dispensing mouth that is distal from the impeller.

The cylindrical chamber further comprises an axial opening from which the impeller collects air that flow into the dispensing conduit.

The impeller is therefore able to generate an air flow which flows along the dispensing conduit towards the dispensing mouth, such as to blow a jet of air towards the outside, which the operator appropriately directs to move the leaves or material present on the ground.

Also known are blowing and aspirating devices in which the dispensing conduit is removably fixed, by means of the radial connection, to the cylindrical chamber, so as to be removable.

Once the dispensing conduit has been removed, in order to convert the blowing device into an aspirating device, it is sufficient to connect an aspirating conduit to the axial opening of the cylindrical chamber; in this way an aspirating air flow is generated along the aspirating conduit, the leaves thus passing through the aspirating mouth that is distal from the impeller.

In these devices, in the aspirating modality, the aspirating conduit supports a tubular appendix, which places the radial connection in communication with a collecting bin of the gather leaves.

These blower aspirators of known type, however, are not free of drawbacks, the first of which is the awkwardness for the operator of having to replace the aspirating and dispensing conduits every time the device is to be switched from the blowing mode to the aspirator mode and vice versa.

This circumstance, beyond the awkwardness created for the operator, who in large working areas often has to carry with him or her not only the conduit in use but also the conduit not in use, also leads to waste of the operator's time. Not last, these known-type device incur high production costs, as they require the arranging of different appendages and engagements, selectively engageable in special fittings realised in the cylindrical chamber.

An aim of the present invention is to obviate the above-mentioned drawbacks of the prior art, with a solution that is simple, rational and relatively inexpensive.

These aims are attained by the characteristics of the invention as reported in the independent claim. The dependent claims delineate preferred and/or particularly advantageous aspects of the invention.

### DESCRIPTION OF THE INVENTION

An aspect of the present invention discloses an aspirating and blowing device which comprises:
- an impeller contained in a substantially cylindrical chamber provided with an access opening for air, for example axial;
- a manifold, provided with a connecting tract branching from the cylindrical chamber, wherein the manifold is forked into a first discharge conduit and a second discharge conduit branching respectively from the connecting tract, and
- valve means associated to the manifold and able to selectively close one from between the first discharge conduit and the second discharge conduit.

With this solution, it is rapidly and easily possible to switch a blower device into an aspirating device, and vice versa, without any need for use of one or more distinct conduits according to the functions which the device is to be used for.

In an advantageous of the invention, the valve means comprise at least an obturator located internally of the manifold and mobile between a first position, in which it occludes the first discharge conduit, and a second position in which it occludes the second discharge conduit.

Further, the obturator is pivotingly associated internally of the manifold.

In this way the movement of the obturator occurs practically and efficiently.

In a further aspect of the invention, the device comprises activating means of the valve means accessible from outside the manifold.

The activating means advantageously comprise at least an activating lever a first end of which is associated to valve means and a second free end whereof is located externally of the manifold and is activatable by the operator.

In this way the activating of the valve means, i.e. the obturator, is rapid, easy and intuitive; the simple activating of the lever by the operator enables switching the functions of aspiration and blowing of the device.

To enable collecting the material by device in the aspirating module, the device advantageously comprises at least a bin provided with an access mouth into which the free end of the first discharge conduit flows.

With the aim of optimising and facilitating the filling of the bin, the access mouth is located in an upper zone thereof.

The device advantageously comprises at least an activating conduit which is associated to the axial opening of the cylindrical chamber and, for example, is provided with an axial tract able to axially open in the cylindrical chamber. Further, the aspirating conduit comprises an widened aspirating mouth; the bin is substantially superposed in plan view at least partially on the aspirating mouth.

Further, the device comprises a flexible tube able to connect to and prolong the second discharge conduit, in such a way as to be able to direct the air flow when the device is in the blowing mode.

The device advantageously comprises at least a pair of wheels for resting to a ground surface supported in rotation by the cylindrical chamber, which thus functions as a support frame of the device.

The manifold preferably lies on a vertical radial plane substantially inclined by an angle of substantially less than 90° with respect to the vertical plane passing through the rotation axis of the pair of wheels.

With this solution, the device can be drawn or pushed by a towing machine, enabling the manifold not to interfere with the drawing organs which constrain the device to the towing machine itself.

Further, the device is associated to motor means, which for example are arranged on a drawing machine or located on-board the device, which are able to activate the impeller in rotation.

### BRIEF DESCRIPTION OF THE DRAWINGS

Further characteristics and advantages of the invention will emerge from a reading of the following description supplied by way of non-limiting example, with the aid of the figures illustrated in the accompanying tables of drawings.

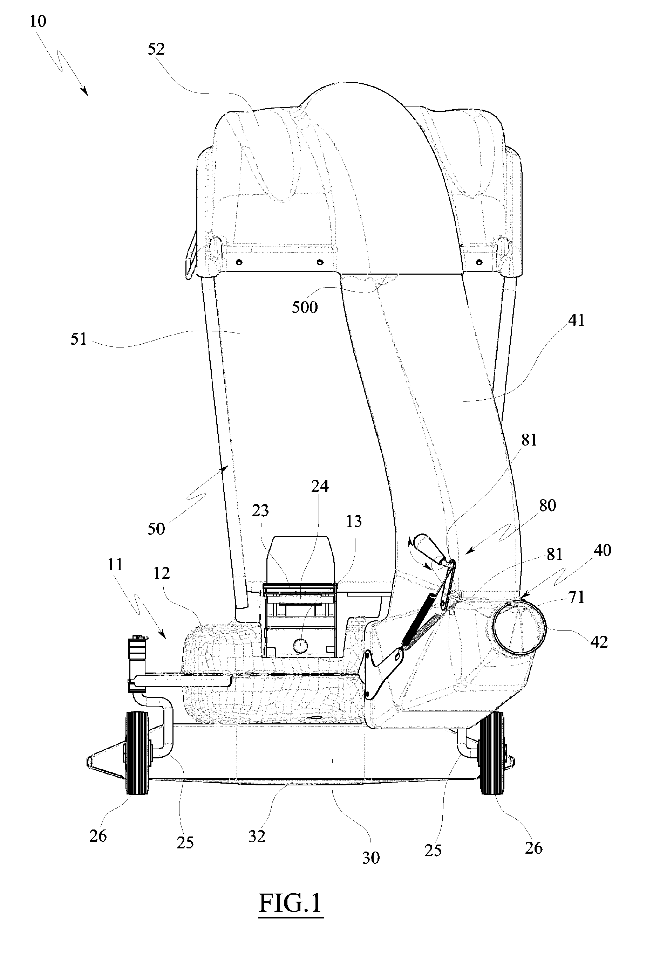

Figure 1 is a front view of an aspirating-blowing device according to the invention.
Figure 2 is a plan view from above of figure 1.
Figure 3 is a section view along line III-III of figure 2.
Figures 4a and 4b are section views along line IV-IV of figure 2, with the obturator respectively in the second position and the first position.

### BEST WAY OF CARRYING OUT THE INVENTION

With particular reference to the figures, reference numeral 10 denotes in its entirety an aspirating and blowing device, for example for collecting and blowing leaves, pruning cuttings, twigs and the like.

In the illustrated example, the device 10 is attachable to a towing vehicle, for example equipped with an engine, which (not shown) can be actuated in motion by the engine or manually by an operator, as known to an expert in the sector.

The device 10 comprises a support frame 11, which for example is made of plastic or metal or another material sufficiently rigid.

The support frame 11 comprises a substantially cylindrical chamber 12, for example having a vertical axis.

The cylindrical chamber is made, for example, of two superimposed half-shells, fixed together and substantially symmetrical with respect to a perpendicular plane to the axis of the cylindrical chamber.

The cylindrical chamber 12 comprises an access opening 121, for example substantially axial, made for example at the lower half-shell. Advantageously, the access opening 121 is realised substantially coaxially with the cylindrical chamber 12.

The cylindrical chamber 12 also comprises a substantially radial outlet opening 122, which for example is made of two overlapping semi-openings respectively realised in the two half-shells.

An impeller 20 is located internally of the cylindrical chamber 12, which impeller has, for example, a rotation axis that is substantially coaxial with the cylindrical chamber 12.

The impeller 20, for example, includes six radial blades 21; however, the impeller 20 could comprise a greater or lesser number of blades depending on constructional requirements.

The impeller 20 comprises a central pin 22 which can insert in an axial (and through-passing) cylindrical shank 123 made in the cylindrical chamber 12, for example from the opposite side with respect to the access opening 121 (i.e. in the upper half-shell).

The central pivot 22 is supported in rotation, for example by means of suitable bearings, by the shank 123, and the free end thereof protrudes externally of the cylindrical chamber 12 and in turn supports a pulley 23.

The pulley 23 is rotated by a flexible member, such as an annular belt 24 wound about the pulley 23 and a further pulley (not shown) which is rotated by the engine located on board the towing vehicle.

To secure the device 10 to the towing vehicle, the frame 11 comprises a fastening pin 13 which protrudes externally of the cylindrical chamber 12 in the radial direction.

Two bent pins 25 branch inferiorly from the cylindrical chamber 12, which support in rotation at least a supporting wheel 26 rested on the ground, for example associated to the bent idle pins.

The supporting wheels 26, in the preferred embodiment shown in the figures, are coaxial and have an interaxis that is slightly greater than the diameter of the cylindrical chamber 12.

For example, the support wheels 26 can be of the pivoting type.

The device 10 could be of the portable type (and that does not require connection to a towing vehicle) and the impeller 20 could be set in rotation by an engine placed on board the device itself.

The device 10 comprises an aspirating conduit 30, which for example is provided with at least an open axial portion branching from the access opening 121, extending it axially.

The axial portion 31 of the aspirating conduit 30 is fixed directly to the cylindrical chamber 12, so as to surround the access opening 121.

The aspirating conduit 30 comprises a widened aspirating mouth 32 on the side opposite to the open end constrained to the access opening 121 of the cylindrical chamber,

The aspirating conduit 30, for example, has a trapezoidal-base polyhedron shape.

In the example shown the aspirating conduit 30 is substantially shaped as a truncated pyramid with a rectangular trapezoid base.

The larger base, positioned below, includes the aspirating mouth 32 and the smaller base, located superiorly, is fixed to the cylindrical chamber 12, so that an axial opening surrounds (internally or externally) the access opening 121 thereof.

The larger base (and hence the aspirating mouth 32), which is asymmetrical with respect to the median plane of the supporting wheels 26, advantageously exhibits the acute vertex that protrudes externally of the interaxis of the supporting wheels.

The device 10 further comprises a manifold 40, which comprises an open connecting portion 400, for example radial, that branches from the outlet opening 122 of the cylindrical chamber 12 and radially extends it.

The connecting portion 400 of the manifold 40 is directly fixed to the cylindrical chamber 12, so as to surround the outlet opening 122.

The manifold 40 is forked into a first exhaust pipe 41 and in a second discharge conduit 42 respectively branching from the connecting portion 400. The first exhaust conduit 41 has longitudinal development substantially axial with a longitudinal axis (slightly curved) substantially vertical, so that the free end of the same is at a higher level with respect to the outlet opening 122 of the cylindrical chamber 12.

The second exhaust conduit 42 exhibits a substantially radial longitudinal axis with longitudinal (straight) substantially horizontal or slightly tilted upwards.

The device 10 comprises, then, a bin 50, which for example comprises a tub-shaped body 51 superiorly closed by a cover, for example, fixed, or alternatively, removable and/or openable.

The bin 50 is supported, for example releasably, by the support frame 11, and thus by the cylindrical chamber 12, (for example by means of a tubular element 111 which is rigidly superiorly connected to the cylindrical chamber and which also superiorly supports the bin 50), for example the bin 50 is located above the cylindrical chamber 12 and is aligned therewith in plan view.

The bin 50, for example in correspondence of the lid 52, includes an access mouth 500, which is insertable (or can insert) substantially snugly into the free end of the first discharge conduit 41, so that the first discharge conduit flows into the bin 50.

Further, the bin 50 is substantially aligned in plan view with at least a portion of the aspirating conduit 30, and therefore with at least a portion of the aspirating mouth 32 thereof.

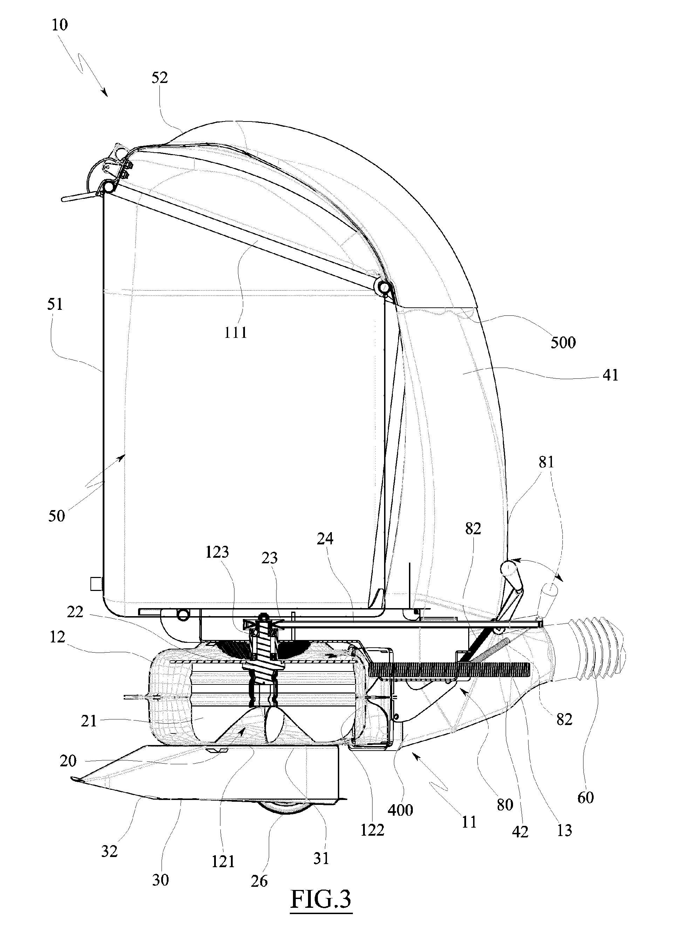

The device 10 comprises a flexible tube 60 (see figure 3) an end of which is able to insert (and be removably locked therein) in the free end of the second exhaust pipe 42, thus extending it axially.

In the illustrated example the manifold 40 in its entirety (or at least a portion thereof) lies on a radial vertical plane substantially inclined by an angle of substantially less than 90° (in the example substantially 45°) to the vertical plane passing through the rotation axis of the pair of support wheels 26.

In other words, shown in its entirety the manifold 40 lies on a radial vertical plane substantially inclined by an angle of substantially less than 90° (in the example substantially 45°) with respect to the vertical plane perpendicular to the fastening pin 13.

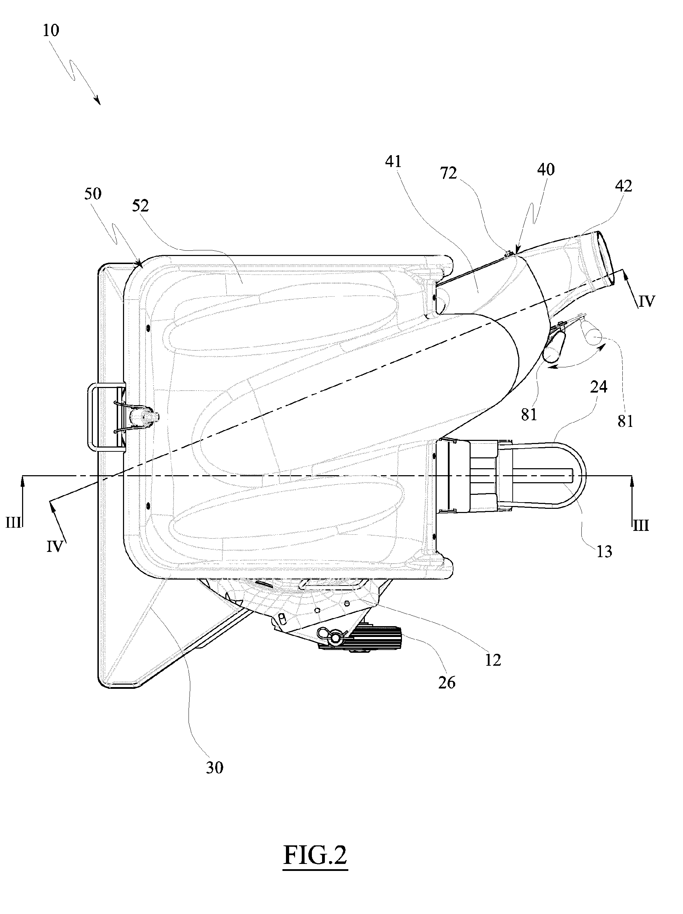

In practice, the manifold 40 (see figure 2) is substantially opposite the vertex of the larger base of the aspirating conduit 30 and not aligned in plan view with the fastening pin 13.

In particular, the device 10 comprises valve means 70 associated to the manifold 40 and able to selectively close one from between the first discharge conduit 41 and the second discharge conduit 42.

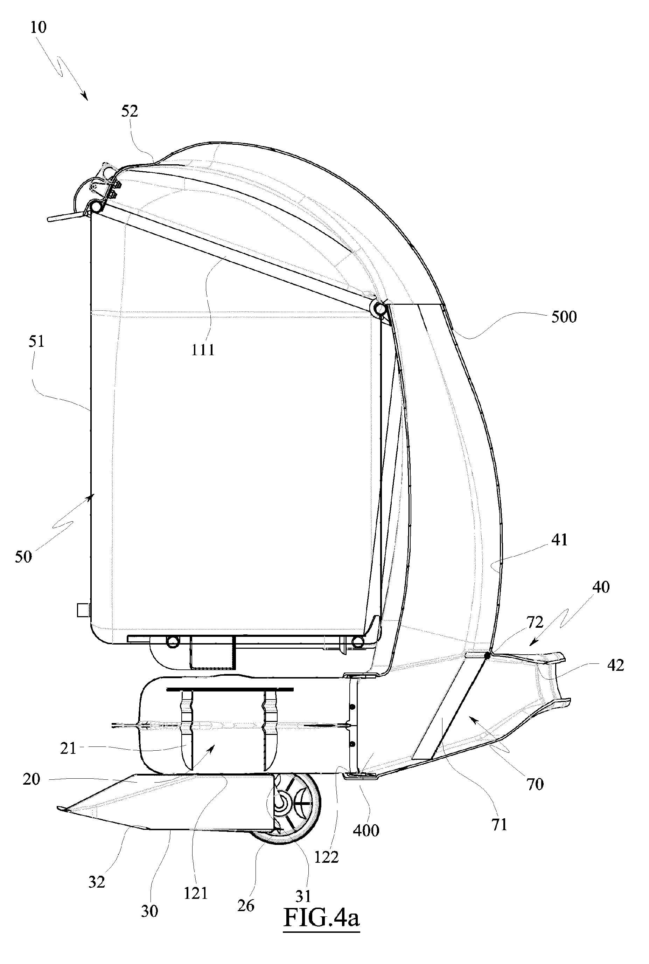

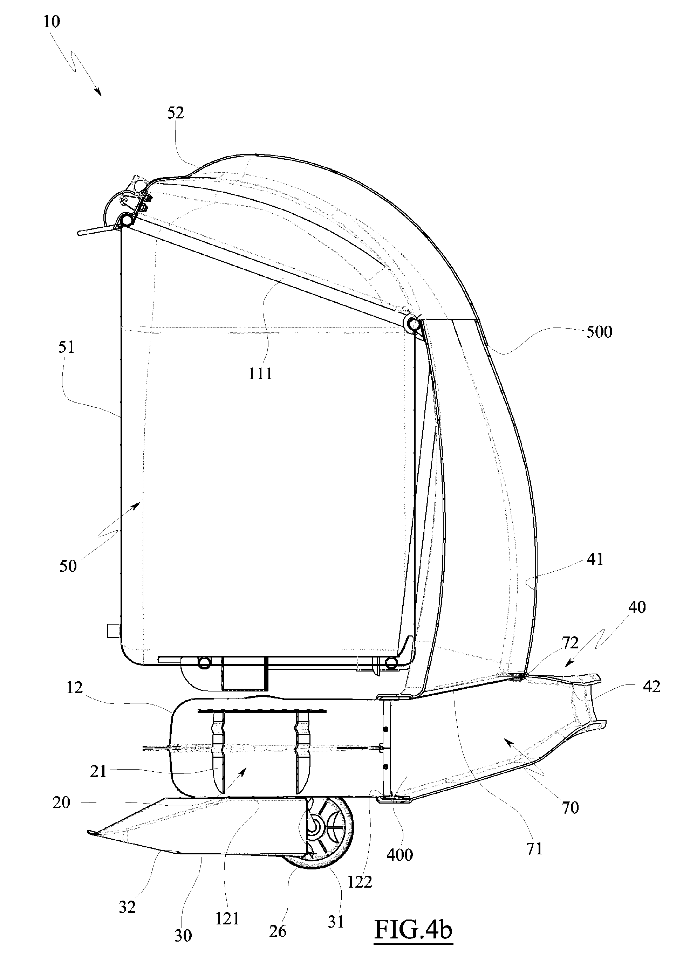

In practice, the valve means comprise at least an obturator 71, which is located internally of the manifold 40 and is mobile between a first position (shown in figure 4b), in which it occludes the first discharge conduit 41, and a second position (shown in figure 4a) in which it occludes the second discharge conduit 42. In practice, the obturator 71 includes a blade an end of which is hinged by a hinge pin 72 (substantially horizontal) to the collector 40.

The hinge pin 72 is, for example, supported by the sides of the manifold 40 and is positioned at the forking of the manifold itself, i.e. at the inner edge which separates the first discharge conduit 41 from the second discharge conduit 42.

The obturator 71 is, therefore, associated tiltingly inside the manifold 40, and is oscillating between two end positions which respectively define the above-described first position and second position.

In detail, in the first position (figure 4b), the obturator 71 is substantially horizontal and occludes the access opening to the first exhaust conduit 41, going to rest on the internal walls of the manifold 40 that define the access opening.

In the second position (figure 4a), the obturator 71 is arranged substantially vertically and occludes the access opening to the second exhaust conduit 42, going to rest on the internal walls of the manifold 40 that define the access opening.

In the embodiment illustrated in the figures, the hinge pin 72 is connected via a sliding connection with the obturator 71, for example, it has a square section and engages in a like sliding seating realized in the obturator 71; further, the hinge pin 71 is also rotatably inserted in a cylindrical seating fashioned in the manifold 40 (in the sides thereof), so as to protrude at least partially externally thereof. The device 10 comprises activating means 80 of the valve means, accessible from externally of the manifold 40.

The activating means 80 comprise at least an activating lever 81, associated to the oscillating manifold 40, a first end of which is constrained in rotation to the obturator 71, in particular is constrained to the portion protruding externally of the manifold 40 of the hinge pin 72, the second end of the operating lever 81 is free and is located externally of the collector 40.

This second end of the actuating lever 81, for example, is equipped with a knob for the grip and is manually operable in rotation to switch the position of the obturator 71 from the first position to the second position, and vice versa. In practice, by actuating the rotation of the operating lever 81 the hinge pin 72 is rotated, which, in turn, rotates the obturator 71.

The activating means 80 include, for example, a helical spring 82, an end of which is constrained to the manifold 40 (and/or to the cylindrical chamber 12) and the other end of which is connected to the lever 81; the helical spring 82 can retain the operating lever 81 in two positions of stable equilibrium, respectively at the first position and the second position.

The valve means can include, alternatively or in addition to the pivoting obturator 71 described above, gate valves or other mechanical obturators of known type.

In the light of the above, the operation of the device 10 is as follows.

The device 10 is operated by actuating the impeller 20 in rotation.

The rotation of the impeller 20 creates a flow of aspirated air flowing through the aspirating conduit 30 from the aspirating mouth 32 towards the cylindrical chamber 12.

The air flow aspirated by the aspirating conduit 30 is conveyed into the manifold 40, in particular into the connecting portion 400 thereof.

If an operator intends to collect leaves or other cut material from the ground, it is sufficient for the actuating lever 81 to be moved into the position corresponding to the second position of the obturator 71, so that the obturator 71 occludes the second exhaust pipe 42 and all the air aspirated by the impeller 20, together with the waste to be collected, is conveyed into the first exhaust conduit 41 and from there into the bin 50.

If an operator wishes to use the device as a blower 10 it is sufficient to position the lever 81 in the position corresponding to the first position of the obturator 71, so that the obturator occludes the first discharge conduit 41 and all the air aspirated by the impeller 20 is conveyed into the second exhaust pipe 42 and, therefore, into the flexible tube 60 connected thereto, so as to be directed where required.

The invention thus conceived is susceptible to numerous modifications and variations, all falling within the inventive concept.

Moreover, all the details are replaceable by other technically equivalent elements.

In practice, the materials employed, as well as the contingent shapes and dimensions, can be any according to requirements without thereby forsaking the protective scope of the following claim

## Claims

1. An aspirating and blowing device (10) comprising:
- an impeller (20) contained in a substantially cylindrical chamber (12) provided with an access opening (121) for air;
- a manifold (40), provided with a connecting tract (400) branching from the cylindrical chamber, wherein the manifold (40) is forked into a first discharge conduit (41) and a second discharge conduit (42) branching respectively from the connecting tract (400), and
- valve means (70) associated to the manifold (40) and able to selectively close one from between the first discharge conduit (41) and the second discharge conduit (42).

2. The device (10) of claim 1, wherein the valve means (70) comprise at least an obturator (71) located internally of the manifold (40) and mobile between a first position, in which it occludes the first discharge conduit (41), and a second position in which it occludes the second discharge conduit (42).

3. The device (10) of claim 2, wherein the obturator (71) is associated tiltingly internally of the manifold (40).

4. The device (10) of any one of the preceding claims, **characterised in that** it comprises activating means (80) of the valve means (70) accessible from outside the manifold (40).

5. The device of claim 4, wherein the activating means (80) comprise at least an activating lever (81), a first end of which is associated to the valve means (70) and a second free end whereof is located externally of the manifold (40).

6. The device (10) of claim 1, **characterised in that** it comprises at least a bin (50) provided with an access mouth (500) into which the free end of the first discharge conduit (41) flows.

7. The device (10) of claim 6, wherein the access mouth (500) is located in an upper zone of the bin (50).

8. The device (10) of claim 1, **characterised in that** it comprises a flexible tube (60) able to connect to the manifold (40) and to prolong the second discharge conduit (42).

9. The device (10) of any one of the preceding claims, **characterised in that** it comprises an aspirating conduit (30) associated to the access opening (121).

10. The device (10) of any one of the preceding claims, **characterised in that** it comprises at least a pair of wheels (26) for resting on a ground surface and supported in rotation by the cylindrical chamber (21).

11. The device (10) of any one of the preceding claims, wherein the manifold (40) lies on a radial vertical plane that is substantially inclined by an angle of substantially less than 90° with respect to the vertical plane passing through the rotation axis of the pair of wheels (26).

12. The device (10) of claim 1, **characterised in that** it comprises motor means for activating the impeller (20) in rotation.
